# EUROPEAN PATENT SPECIFICATION

(11) **EP 2 724 846 B1**
(45) Date of publication and mention of the grant of the patent: **31.08.2016**
(21) Application number: 12189616.1
(22) Date of filing: 23.10.2012
(51) Int. Cl.: B29C 70/54

(54) **Device and method for placement of an envelope on a deformable element**
Vorrichtung und Verfahren zum Platzieren eines Umschlags auf einem verformbaren Element
Dispositif et procédé de mise en place d'une enveloppe sur un élément déformable

(43) Date of publication of application: 30.04.2014
(73) Proprietor: Thöni Industriebetriebe GmbH, 6410 Telfs (AT)
(72) Inventor: Schennach, Oliver, 6414 Mieming (AT); Ludwig, Matthias, 6135 Stans (AT); Köll, Thomas, 6410 Telfs (AT)
(74) Representative: Dilg, Haeusler, Schindelmann Patentanwaltsgesellschaft mbH

(56) References cited:
- AT-A4- 508 120
- US-A- 4 092 769

## Description

### FIELD OF THE INVENTION

The present invention relates to the field of building structural elements from a deformable element. In particular, the present invention relates to an enveloping device for placement of an envelope on a deformable element and a respective method.

### BACKGROUND

WO 2010/129975 A2 relates to a method for producing a structural element comprising a fibre-rein-forced plastic. According to the invention, a flexible hose is provided with a tubular woven fabric and shaped into the desired form. A plastic that is preferably in liquid form is applied to the tubular woven fabric and is subsequently cured. The woven fabric may be provided with an additional tube envelope which may be a heat-shrinkable sleeve.

DE 100 09 528 C2 relates to a method and a device for applying an elastic tube section on a cylindrical line, wherein the elastic tube section is widened by pressurized air during sliding it onto the line. For widening, the pressurized air is provided over a pipe slidable into the tube section. The pipe serves as guiding duct for sliding in the line, wherein the pipe during insertion of the line is switched unpressurized or remains unpressurized by double-walled configuration of the pipe.

US 4,092,769 relates to an apparatus for encapsulating a bundle of fibers which are aligned generally parallel to each other axially within an elastomeric tube having an unexpanded diameter smaller than the normal diameter two of the bundle. This is achieved by pressurizing the tube, thereby expanding the tube radially to a diameter that approximates or is larger than the uncompressed diameter of the fiber bundle when the fiber bundle is drawn up into the tube. If the fiber bundle reaches its end position, the tube is vented slowly to atmospheric pressure thereby allowing tube to contact about fiber bundle so that the latter is tightly encapsulated within the former.

In view of the above described situation, there exists a need for an improved technique that facilitates production of a deformable element with an envelope thereon.

This need is met by the subject-matter according to the independent claims 1, 9 and 12. Advantageous embodiments of the herein disclosed subject-matter are described by the dependent claims.

According to an embodiment of a first aspect of the herein disclosed subject-matter there is provided an enveloping device for placement of an envelope on a deformable element, wherein the envelope comprises an internal space, the enveloping device comprising:
a carrier configured for receiving the deformable element; and an envelope holder configured for holding the envelope, wherein the carrier and the envelope holder are movable with regard to each other and are configured to perform an insertion movement in which the deformable element received by the carrier is inserted into the internal space of the envelope held by the envelope holder, wherein the enveloping device further comprises a gas outlet configured for providing pressurized gas to the internal space of the envelope during the insertion movement.

This aspect of the herein disclosed subject-matter is based on the idea that the insertion of the deformable element into the internal space of the envelope is facilitated by providing pressurized gas to the internal space of the envelope during the insertion movement. It was found that providing the internal space with pressurized gas during insertion of the deformable element into the internal space facilitates the insertion movement.

According to an embodiment, the envelope is a tube, i.e. it is circumferentially closed. According to an embodiment, the envelope is made of a flexible material, e.g. of plastic or rubber. According to an embodiment, the envelope is a gastight tube.

The carrier may be any carrier which is suitable for holding the deformable element such that the insertion movement of the carrier into the envelope can be performed. For example, the carrier may be a rod on which the deformable element is mounted. The carrier may extend through the deformable element. For example, in an embodiment the deformable element is tube-shaped. In such an embodiment, the carrier may be located in the tube shaped deformable element may. The carrier may extending partially or fully through the deformable element. In other embodiments, the carrier may be attached to a front face of the deformable element. However, other configurations of the carrier and the attachment of the deformable element to the carrier are also possible.

The insertion movement is performed by moving the carrier with regard to the envelope holder, by moving the envelope holder with regard to the carrier or by moving both, the envelope holder and the carrier. Accordingly, one of the carrier and the envelope holder may be spatially fixed and the other may be movable in order to provide for the insertion movement of the deformable element held by the carrier and the envelope hold by the envelope holder.

The envelope has an open end, through which the deformable element is inserted into the internal space, and may have a closed end, the gas outlet may be located in the vicinity of the closed end of the envelope.

According to the invention, the envelope holder comprises a holder part being configured for holding a first end of the envelope. The envelope has an open end and, the holder part configured for holding the open end of the envelope. The carrier and the holder part are arranged and configured to move the deformable element into the internal space through the holder part. The holder part has an opening configured for allowing pass-through of the deformable element while the first end of the envelope may surround the opening of the holder part. For example, according to an embodiment the holder part comprises a sleeve. In accordance with an embodiment, the sleeve has an outer surface configured for receiving the first end of the envelope. Further, the sleeve may be configured so as to have an inner surface forming a through-hole for pass-through of the deformable element during the insertion movement.

Moving the deformable element through the holder part, which in turn holds the envelope, allows for a secure insertion of the deformable element into the internal space of the envelope without wrinkling of the envelope.

The envelope holder has a second part spaced apart from the holder part, the second part being configured for holding a second end of the envelope. For example, according to an embodiment, the envelope holder is configured for holding the envelope on two opposite ends thereof. This allows for an efficient design of the envelope holder and in particular for an easy adjustment of the envelope holder to a different length of envelopes. Further, in such a case due to the pressurized gas provided to the internal space of the envelope, the structural rigidity of the envelope may be increased by the pressurized gas. According to a further embodiment, guiding elements are provided between the holder part and the second part of the envelope holder.

The second part of the envelope holder comprises the gas outlet. Hence the gas outlet is located opposite the holder part through which the deformable element is inserted into the internal space.

According to a further embodiment, the second part of the envelope holder is a closing plug having an outer surface configured for receiving the second end of the envelope. This allows for easy and secure mounting of the envelope to the second part of the envelope holder. According to an embodiment, the closing plug is adapted for closing the second end of the envelope or at least providing a flow resistance for the pressurized gas in the internal space of the envelope.

According to an embodiment, the carrier and the envelope holder are configured to be movable with respect to each other into a loading position, which allows attachment of the deformable element to the carrier outside the internal space. For example, according to an embodiment, in the loading position the deformable element held by the carrier and the envelope held by the envelope holder are located spaced apart from each other. This may facilitate mounting of the deformable element to the carrier. Further, this may facilitate mounting of the envelope to the envelope holder.

According to an embodiment, the second part is be moveably mounted on a support provided for bearing the second part and aligning the second part (and hence the envelope) with the path of motion of the deformable element during the insertion movement. A good alignment between the deformable element and the envelope in the envelope holder reduces the risk of damage of the deformable element during insertion into the envelope.

According to an embodiment, in the loading position the carrier extends through the envelope holder. Such an embodiment may have a number of advantages. For example, this embodiment may allow for the deformable element to be pulled into the internal space of the envelope. Further, the carrier may have a bearing surface for bearing the second part of the envelope holder. For example the second part may be moveably mounted on the carrier. Hence the carrier forms the support for the second part. The carrier bearing the second part of the envelope holder may provide an alignment of the second part of the envelope holder and the deformable element.

According to an embodiment, the carrier is spatially fixed and the envelope holder is movable with regard to the carrier to perform the insertion movement. In other words, in such an embodiment the deformable element, held by the carrier, is spatially fixed and the envelope is moved over the deformable element by the envelope holder. Movement of the envelope has the advantage that simultaneously with the movement of the envelope over the deformable element the envelope can be conditioned by one or more spatially fixed conditioning devices. In this way the efficiency of manufacture of the deformable element with the conditioned envelope thereon may be increased.

If a near end of the deformable element, which faces the internal space, is attached to the carrier movement of the deformable element into the internal space corresponds to a pulling action, e.g. irrespective of whether the carrier extends through the envelope holder or not or of whether the carrier or the envelope holder is spatially fixed.

According to an embodiment, the deformable element is a fiber element comprising a plurality of fibers. According to an embodiment, the fiber element comprising a plurality of fibers and a plurality of cavities between the fibers. As long as the cavities are unfilled, the fibers of the fiber element has a limited movability with regard to each other thus providing some degree of deformability of the fiber element. After filling the cavities of the fibers with a filling medium, e.g. a polymer, a resin, etc., and hardening the filling medium, the movability of the fibers is reduced or completely removed thus resulting in an element having a high stiffness.

However, it should be understood that the deformable element is not limited to fiber elements. Rather, according to another, more general embodiment the deformable element is a deformable element which comprises a plurality of cavities. Hence, generally a deformable element having a plurality of cavities may be stiffened by filling the cavities with a suitable filling medium. In this regard, a fiber element having a plurality of cavities is only one example of a deformable element having a plurality of cavities. According to an embodiment, the envelope on the deformable element is used for filling the plurality of cavities of the deformable element.

According to an embodiment, the enveloping device comprises at least one actuator configured for performing the insertion movement. For example, the actuator may be configured for moving the envelope holder. According to another embodiment, the at least one actuator is configured for moving the carrier. According to a further embodiment, the at least one actuator is configured for moving a further element, for example a conditioning device, which is configured for conditioning the surface of the envelope. However, in an alternative embodiment, where the envelope holder is moved by the at least one actuator, such a conditioning device may have a fixed location and the conditioning of the surface is performed by moving the envelope past the conditioning device.

According to a further embodiment, the enveloping device comprises a valve for controlling the flow of pressurized gas to the internal space. For example, according to an embodiment, the valve is located between a source of pressurized gas and the gas outlet.

According to a further embodiment, a controller is provided for controlling the at least one actuator and/or the valve. The controller may comprise sub-controllers for controlling each of the at least one actuator and the valve. Further, according to an embodiment, the controller is configured for controlling only the at least one actuator. In another embodiment, the controller is configured for controlling only the valve. For example, in such an embodiment, the elements, which are not controlled by the controller, may be operated by hand.

According to an embodiment, the inner surface of the sleeve is a polished surface avoiding damage of the fibers. According to a further embodiment, the through-hole of the sleeve has a cross-sectional shape which conforms to the cross-sectional shape of the deformable element. Further, according to an embodiment, the cross-sectional area of the deformable element is smaller than the cross-sectional area of the through-hole. In other words, in accordance with an embodiment, the deformable element and the through-hole of the sleeve are adapted to each other such that the deformable element can be located in the through-hole with radial play. This may help to treat the deformable element with care during the insertion movement. Treatment with care may be in particular advantageous for deformable elements in the form of fiber elements.

According to an embodiment of a second aspect of the herein disclosed subject-matter, a method for placement of an envelope on a deformable element is provided, wherein the envelope comprises an internal space, the method comprising: performing an insertion movement by moving the envelope and a deformable element with regard to each other, thereby inserting the deformable element into the internal space of the envelope; providing pressurized gas to the internal space of the envelope during the insertion movement.

In accordance with an embodiment, during the insertion movement the internal space is an empty space which is gradually occupied with the deformable element as the insertion movement proceeds.

According to an embodiment, the insertion movement comprises pulling the deformable element into the envelope. As noted above, the end of the deformable element which faces the internal space may be denoted as "near end". Pulling may be performed e.g. by pulling the near of the deformable element into the internal space. However, "pulling the near end of the deformable element does not exclude pulling action on the other parts of the deformable element. Rather, the deformable element may e.g. be attached to the carrier over its full length.

According to a further embodiment, the insertion movement comprises moving the deformable element into the internal space through the through-hole of a sleeve on an outer surface of which the envelope is held. According to an embodiment, the cross-sectional shape of the deformable element conforms to the cross-sectional shape of the through-hole. Additionally, the cross-sectional area of the deformable element may be smaller than the cross-sectional area of the through-hole thus providing radial play between the deformable element and the through hole of the sleeve.

According to embodiments of the second aspect, the method is adapted for providing the functionality of one or more of the above-mentioned embodiments and/or for providing the functionality as required by one or more of the above-mentioned embodiments, in particular of the embodiments of the first aspect.

By providing the pressurized gas to the internal space of the envelope, the deformable element may be protected from damage due to the insertion movement. Further, structural rigidity of the envelope can be increased by pressurizing the internal space. Further, in accordance with embodiments of the herein disclosed subject-matter no further tools for holding open the internal space are necessary.

According to a third aspect of the herein disclosed subject-matter, a computer program is provided, the computer program being configured for, when being executed by a data-processing device, controlling the method as set forth in the second aspect or an embodiment thereof.

According to an embodiment of the third aspect, the controller of the herein disclosed subject matter is at least in part realized by the data processing device and the functionality of the controller as disclosed herein is at least partially provided by the computer program running on the processing device.

As used herein, reference to a computer program is intended to be equivalent to a reference to a program element and/or a computer-readable medium containing instructions for controlling a data-processing device to effect and/or coordinate the performance of the method and its embodiments as described herein.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In the above, there have been described and in the following there will be described exemplary embodiments of the subject-matter disclosed herein with reference to an enveloping device and a respective method. It has to be pointed out that of course any combination of features relating to different aspects of the herein disclosed subject-matter is also possible. In particular, some embodiments have been or will be described with reference to apparatus-type features, whereas other embodiments have been or will be described with reference to method-type features. However, a person skilled in the art will gather from the above and the following description that, unless otherwise notified, in addition to any combination of features belonging to one aspect also any combination between features relating to different aspects of embodiments, for example even between features of the apparatus-type embodiments and features of the method-type embodiments is considered to be disclosed with this application.

It is noted that according to an embodiment any device or method disclosed herein is configured for use in the manufacture of structural elements (i.e. constructional elements) from a deformable element.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Fig. 1 shows an enveloping device in accordance with embodiments of the herein disclosed subject matter.
Fig. 2 shows part of a further enveloping device in accordance with embodiments of the herein disclosed subject-matter.
Fig. 3 shows a cross-sectional view of a deformable element placed in an envelope according to embodiments of the herein disclosed subject matter.

### DETAILED DESCRIPTION

The illustration in the drawings is schematic. It is noted that in different figures, similar or identical elements are provided with the same reference signs or with reference signs, which are different from the corresponding reference signs only within the first digit.

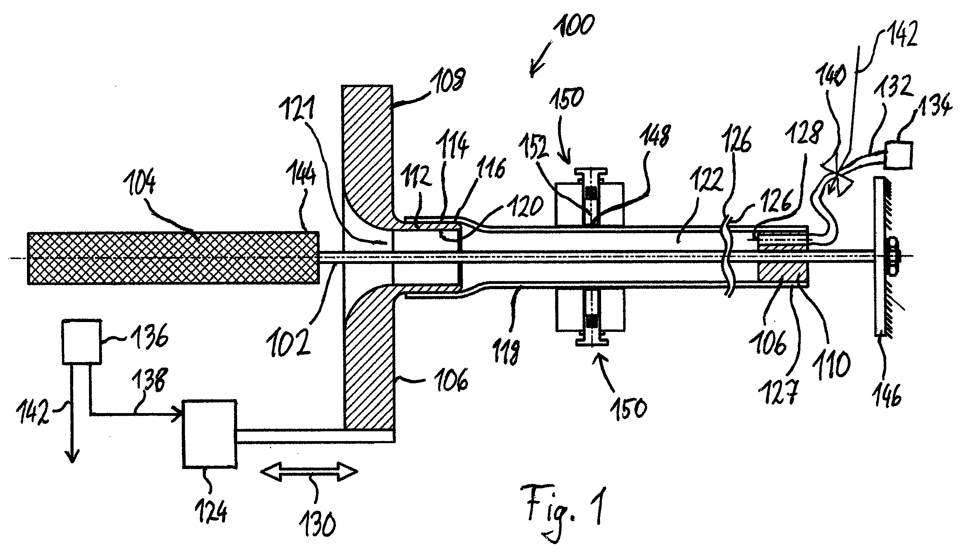

Fig. 1 shows an enveloping device 100 in accordance with embodiments of the herein disclosed subject matter.

The enveloping device 100 comprises a carrier 102 for receiving a deformable element 104. In accordance with an embodiment of the herein disclosed subject-matter, the carrier 102 is fixed in space. Accordingly, also the deformable element 104 held by the carrier 102 is fixed in space. In accordance with an embodiment, the deformable element 104 is a fiber element comprising a plurality of fibers and a plurality of cavities between the fibers.

The enveloping device 100 further comprises an envelope holder 106 comprising a holder part 108 and a second part 110. The second part 110 is spaced apart from the holder part 108.

In accordance with an embodiment, the holder part 108 comprises a sleeve 112, the sleeve 112 having an outer surface 114 configured for receiving the first end 116 of an envelope 118. The sleeve has an inner surface 120, which forms a through-hole 121 for pass-through of the deformable element 104 during an insertion movement in which the deformable element 104 is inserted into an internal space 122 of the envelope 118. The internal space 122 is configured for receiving the deformable element 104. In accordance with an embodiment, the holder part 108 is movable with regard to the deformable element. To this end, an actuator 124 is provided, which is mechanically coupled to the holder part 108 to thereby move the holder part 108 with regard to the deformable element 104. The actuator 124 may be for example an electrical actuator, a hydraulic actuator, etc. According to an embodiment, a cross-sectional shape of the through-hole 121 conforms to a cross-sectional shape of the deformable element. For example, the cross-sectional shape of both the through-hole 121 and the deformable element 104 is a circular shape. According to an embodiment, the diameter of the deformable element 104 is smaller than the diameter of the through-hole 121.

According to an embodiment, the envelope 118 is mounted to the envelope holder 106 in a loading position shown in Fig. 1, in which the deformable element 104 is located outside the internal space 122 of the envelope 118. It is noted that in Fig. 1 the envelope 118 is not shown in its full length, indicated by the lines 126. The second part 110 is configured for holding a second end 127 of the envelope 118.

Starting from the loading position, by movement of the holder part 108 towards the deformable element 104 and over the deformable element 104, i.e. towards the left in Fig. 1, the deformable element is placed in the internal space 122 of the envelope 118.

In accordance with embodiments of the herein disclosed subject-matter, pressurized gas such as pressurized air is provided to the internal space 122 of the envelope 118 during the insertion movement of the deformable element 104 into the internal space 122. The pressurized gas is provided by a gas outlet 128. In accordance with an embodiment, the gas outlet 128 is located in the second part, which may be formed by a closing plug as shown in Fig. 1. The pressurized gas flows out of the envelope through the first end 116 of the envelope 118 through which the deformable element 104 is inserted into the internal space 122 of the envelope 118. By this configuration, providing pressurized gas to the internal space 122 of the envelope 118 on the one hand and maintaining the end 116 through which the deformable element 104 is inserted into the internal space 122 open, an gas flow from the internal space 122 towards the deformable element 104 and out of the envelope 118 is generated. This gas flow allows the placement of the deformable element 104 in the internal space 122 of the envelope without damaging the deformable element. This is in particular advantageous in cases, where the deformable element is a fiber element comprising a plurality of fibers. For example, the deformable element can be a fiber element as disclosed in AT 5081120 B1 and WO 2010/129975 A2. The fibers may be natural fibers or artificial fibers and may be made of e.g. made of glass, carbon, aramide, basalt, hemp, flax, cotton or mixtures thereof, just to name some examples. The deformable element may be provided in the shape of a tube and may be a knitted or woven element. Further, the envelope may be a flexible tube as disclosed in AT 5081120 B1 and WO 2010/129975 A2. For example, the envelope may be of rubber, plastic, polymer, polyvinylchloride, polyethylene, polyamide, polyurethane, silicone, polytetrafluorethylene, etc. The devices and methods as disclosed herein may be used for placement of a flexible tube (envelope) over a tubular woven fabric (deformable element) as disclosed in these documents.

In order to provide for the movability of the envelope holder 106 and in particular of the second part 110 of the envelope holder, the second part of the envelope holder is movable with regard to the carrier 102. Hence the second part 110 is moveable with regard to the deformable element 104 held by the carrier 102. According to an embodiment, the second part 110 is not actively driven by an actuator. Rather, according to an embodiment, the second part 110 is freely movable in axial direction 130, i.e. in the direction of the insertion movement. In this case, the second part 110 is pulled by the holder part 108 via the envelope 118. To provide movability of the second part 110, a flexible gas hose 132 is provided, which connects the gas outlet 128 with a gas pressurized gas reservoir 134.

According to other embodiments, the holder part and the second part may be mechanically connected to maintain the holder part and the second part at a distance suitable for holding the envelope.

In accordance with an embodiment, a controller 136 is provided for controlling the actuator 124 by control signals 138 in order to perform the insertion movement of the deformable element 104 into the internal space 122 of the envelope 118. In order to control the flow of pressurized gas into the internal space 122, a valve 140 is provided, the valve 140 also being controlled by the controller 136 via control signals 142.

Alternatively to the embodiments shown in Fig. 1, the gas outlet may be provided in the holder part 108. For example, according to an embodiment, the gas outlet may be provided in the sleeve 112. Further, while in Fig. 1 the carrier 102 extends through the envelope holder 106 in the loading position of the enveloping device 100, in other embodiments the carrier may extend to the opposite side such that the carrier is not fed through the second part 110 of the envelope holder.

Irrespective, which carrier configuration is implemented, it has been found advantageous to pull the deformable element into the internal space 122 of the envelope 118. This can be accomplished with any carrier configuration as long as the near end 144 of the deformable element 104, which faces the first end 116 of the envelope 118 is attached to the carrier 102. In this regard it is mentioned that the wording "near end 144 facing the first end 116 of the envelope 118", is considered effectively equivalent to the wording "near end 144 facing (in the loading position, before the deformable element is moved into the internal space) the holder part 108 through which the deformable element is moved into the internal space 122".

As mentioned above, according to an embodiment, the carrier 102 is fixed in space, e.g. by mounting the carrier 102 to a base 146. It should be understood that also the actuator 124 might be mounted to the same base 146 or may be at least mechanically connected thereto so as to fix the base 146 and the actuator 124 relative to each other. In alternative embodiments (not shown in Fig. 1), the carrier may be coupled to and moved by the actuator 124 for performing the insertion movement. In such a case the envelope holder 106 and the actuator 124 may be fixed with respect to a common base (not shown in Fig. 1).

According to an embodiment, a tool 148 for conditioning the envelope is provided. For example, according to an embodiment the tool is configured for generating a predetermined breaking line in the envelope 118 held by the envelope holder 106. In accordance with an embodiment, the tool 148 is part of a conditioning device 150 for conditioning the envelope 118 of the deformable element 104. In accordance with an embodiment, the conditioning device 150 comprises a depth adjustment device 152 configured for maintaining a predetermined depth up to which the tool 148 works on the envelope 118, wherein the predetermined depth is less than the wall thickness of the envelope 118. In accordance with an embodiment, the enveloping device 100 comprises two conditioning devices 150, as shown in Fig. 1. According to other embodiments, only a single conditioning device 150 or three or more conditioning devices 150 may be provided.

In accordance with an embodiment, the two or more conditioning devices 150 are uniformly distributed over the circumference of the envelope 118. Hence, if two conditioning devices 150 are provided, these conditioning devices are located diametrically opposite each other with regard to the envelope 118.

According to an embodiment, after filling the plurality of cavities in the deformable element 104, the envelope 118 is removed from the deformable element 104 by separating the envelope 118 along the predetermined breaking line (not shown in Fig. 1).

While only a single enveloping device is shown in Fig. 1 it should be understood that according to other embodiments two, three or even more enveloping devices may be provided and operated simultaneously. For example, a single actuator may be provided for operating two or more enveloping devices.

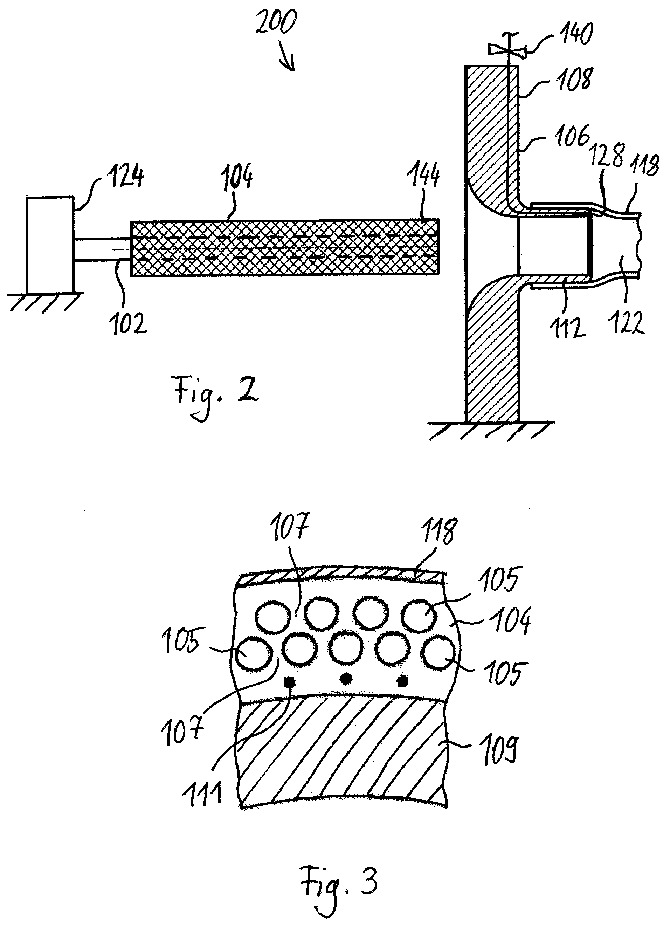

Fig. 2 shows part of a further enveloping device 200 in accordance with embodiments of the herein disclosed subject-matter.

Despite the below described differences, the enveloping device 200 in Fig. 2 is similar to the enveloping device 100 shown in Fig. 1. Elements and features, which are similar or identical to the elements in features shown in Fig. 1, are denoted with the same reference signs in Fig. 2 and the description thereof is not repeated here.

In the enveloping device 200 the holder part 108 of the envelope holder 106 is fixed in space, wherein the carrier 102 is movable with regard to the envelope holder 106. To this end, an actuator 124 is coupled to the carrier 102.

Further, the carrier 102 extends in a direction away from the envelope holder 106. However, in order to perform a pulling action when inserting the deformable element 104 into the internal space 122 of the envelope 118, the near end 144 of the deformable element 104 is attached to the carrier 102, i.e. the carrier 102 extends through the deformable element 104, as shown in Fig. 2.

The enveloping device 200 further comprises a gas outlet 128. However, contrary to the embodiment shown in Fig. 1, the gas outlet 128 is located in the sleeve 112. While only one outlet opening of the gas outlet 128 is shown in Fig. 1, it should be understood that the gas outlet 128 may comprise a single outlet opening or two or more outlet openings. For example, the outlet openings may be distributed about the front face of the sleeve 112 which faces the internal space 122 of the envelope.

Fig. 3 shows a cross-sectional view of a deformable element 104 placed in an envelope 118 according to embodiments of the herein disclosed subject matter.

In accordance with an embodiment, the deformable element 104 comprises a plurality of fibers, some of which are denoted by 105. The cavities (spaces) between the fibers 105 are denoted by 107 and are not drawn to scale. According to an embodiment, a core element 109 is located inside the deformable element 104. Hence, in this embodiment the deformable element is sandwiched between the envelope 118 and the core element 109. For assisting the filling of the filling medium into the cavities 107, a flow promoter 111 may be provided. Filling can be performed through the space between the envelope 118 and the core 109. According to an embodiment, the envelope 118 and the core 109 are gastight. It should be understood that in Fig. 3 the dimensions of the individual elements and the spacings between the elements are not drawn to scale but may be exaggerated for the purpose ease of understanding. In particular the spacings (e.g. between the envelope 118 and the fibers 105) may be reduced or even be zero.

According to embodiments of the invention, any suitable control-related entity disclosed herein, e.g. the controller 136, is at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware. According to an embodiment, the controller 136 comprises a processor device including at least one processor for carrying out at least one computer program corresponding to a respective software module.

It should be noted that any structural entity disclosed herein (e.g. components, units, elements and devices, e.g. the envelope holder or the carrier) are not limited to a dedicated entity as described in some embodiments. Rather, the herein disclosed subject matter may be implemented in various ways and with various granularity on device level while still providing the desired functionality. Further, it should be noted that according to embodiments a separate entity may be provided for each of the functions disclosed herein. According to other embodiments, an entity is configured for providing two or more functions as disclosed herein.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
Described is an enveloping device 100 for placement of an envelope 118 on a deformable element 104 wherein the envelope 118 comprises an internal space 122 configured for receiving the deformable element. The enveloping device comprises a carrier 102 configured for receiving the deformable element 104 and an envelope holder 106 configured for holding the envelope 118. The carrier 102 and the envelope holder 106 are moveable with regard to each other and are configured to perform an insertion movement in which the deformable element 104 received by the carrier 102 is inserted into the internal space 122 of the envelope 118 held by the envelope holder 106. Further, the enveloping device comprises a gas outlet 128 configured for providing pressurized gas to the internal space 122 of the envelope 118 during the insertion movement in order to facilitate the placement of the deformable element 104 in the envelope 118.

### List of reference signs:

- 100, 200: enveloping device
- 102: carrier
- 104: deformable element
- 105: fiber
- 106: envelope holder
- 107: cavity in 104
- 108: holder part
- 109: core element
- 110: second part
- 111: flow promoter
- 112: sleeve
- 114: outer surface
- 116: first end of 118
- 118: envelope
- 120: inner surface of 112
- 121: through-hole in 106
- 122: internal space of 118
- 124: actuator
- 126: lines indicating interrupt in drawing
- 127: second end of 118
- 128: gas outlet
- 130: axial direction
- 132: gas hose
- 134: reservoir for pressurized gas
- 136: controller
- 138: control signals to 124
- 140: valve
- 142: control signals to 140
- 144: near end of 104
- 146: base
- 148: tool for generating a predetermined breaking line
- 150: conditioning device
- 152: adjustment device

## Claims

1. Enveloping device (100, 200) for placement of an envelope (118) on a deformable element (104) wherein the envelope (118) comprises an internal space (122) and an open end, the enveloping device comprising:
a carrier (102) configured for receiving the deformable element (104); and
an envelope holder (106) configured for holding the envelope (118);
wherein the carrier (102) and the envelope holder (106) are moveable with regard to each other and are configured to perform an insertion movement in which the deformable element (104) received by the carrier (102) is inserted into the internal space (122) of the envelope (118) held by the envelope holder (106);
the envelope holder (106) comprising a holder part (108) being configured for holding the open end (116) of the envelope (118) open;
the carrier (102) and the holder part (108) being arranged and configured to move the deformable element (104) into the internal space (122) through the holder part (108); and
the enveloping device further comprising a gas outlet (128) configured for providing pressurized gas to the internal space (122) of the envelope (118) during the insertion movement and thereby generating a gas flow from the internal space (122) towards the deformable element (104) and out of the envelope (118);
wherein the envelope holder (106) has a second part (110) spaced apart from the holder part (108), and the second part being (110) configured for holding a second end of the envelope (118); and
wherein the second part (110) comprises the gas outlet (128).

2. Enveloping device according to claim 1, wherein
the holder part (108) comprises a sleeve (112);
the sleeve (112) has an outer surface (114) configured for receiving the first end (116) of the envelope (118);
the sleeve (112) further has an inner surface (120) forming a through-hole (121) for pass-through of the deformable element (104) during the insertion movement.

3. Enveloping device according to any one of claims 1 to 2, wherein
the second part (110) is a closing plug having an outer surface configured for receiving the second end (127) of the envelope (118).

4. Enveloping device according to any one of claims 1 to 3, wherein
the carrier (102) and the envelope holder (106) are configured to be movable with respect to each other into a loading position which allows attachment of the deformable element (104) to the carrier (102) outside the internal space (122); and
in the loading position the carrier (102) extends through the envelope holder (106).

5. Enveloping device according to any one of claims 1 to 4, wherein
the carrier (102) is spatially fixed and the envelope holder (106) is moveable with regard to the carrier (102) to perform the insertion movement.

6. Enveloping device according to any one of claims 1 to 5, wherein
the deformable element (104) is a fiber element comprising a plurality of fibers (105).

7. Enveloping device according to claim 6 and further comprising the features of claim 2, wherein the inner surface (120) of the sleeve (112) is a polished surface avoiding damage of the fibers (105).

8. Enveloping device according to any one of claims 1 to 7, further comprising:
at least one actuator (124) configured for performing the insertion movement;
a valve (140) for controlling the flow of pressurized gas to the internal space (122); and
a controller (136) for controlling the at least one actuator (124) and/or the valve (140).

9. Method for placement of an envelope (118) on a deformable element (104) wherein the envelope (118) comprises an internal space (122) and an open end, the method comprising:
performing an insertion movement by moving the envelope (118) and the deformable element (104) with regard to each other, thereby inserting the deformable element (104) into the internal space (122) of the envelope (118);
wherein inserting the deformable element (104) into the internal space (122) includes moving the deformable element (104) into the internal space (122) through a holder part (108) being configured to hold the open end (116) of the envelope (118) open;
providing pressurized gas through a gas outlet to the internal space (122) of the envelope (118) during the insertion movement, thereby generating a gas flow from the internal space (122) towards the deformable element (104) and out of the envelope (118);
wherein an envelope holder (106) comprises the holder part (108) and a second part (110) spaced apart from the holder part (108), and the second part being (110) configured for holding a second end of the envelope (118); and
wherein the second part (110) comprises the gas outlet (128).

10. Method according to claim 9,
wherein the insertion movement comprises pulling the deformable element (104) into the envelope (118).

11. Method according to any one of claims 9 to 10, wherein
the holder part comprises a sleeve and the insertion movement comprises moving the deformable element (104) into the internal space (122) through the through hole of the sleeve (112) on an outer surface (114) of which the envelope (118) is held, wherein optionally the cross-sectional shape of the deformable element (104) conforms to the cross-sectional shape of the through hole and the cross-sectional area of the deformable element (104) is smaller than the cross-sectional area of the through-hole (121).

12. A computer program, the computer program being configured for, when being executed by a data processing device (136), controlling the method as set forth in any one of the claims 9 to 11.

## Patentansprüche

1. Umhüllungsvorrichtung (100, 200) zum Platzieren einer Umhüllung (118) auf einem deformierbaren Element (104), wobei
die Umhüllung (118) einen Innenraum (122) und ein offenes Ende aufweist, wobei die Umhüllungsvorrichtung aufweist:
einen Träger (102), welcher konfiguriert ist zum Aufnehmen des deformierbaren Elements (104); und
einen Umhüllungshalter (106), welcher konfiguriert ist zum Halten der Umhüllung (118);
wobei der Träger (102) und der Umhüllungshalter (106)
bewegbar sind in Bezug auf einander und
konfiguriert sind eine Einführbewegung durchzuführen, bei der das deformierbare Element (104) mittels des Trägers (102) aufgenommen wird in den Innenraum (122) der Umhüllung (118) hinein, welche mittels des Umhüllungshalters (106) gehalten ist;
wobei der Umhüllungshalter (106) einen Halterteil (108) aufweist, welcher konfiguriert ist zum Offenhalten des offenen Endes (116) der Umhüllung (118);
wobei der Träger (102) und der Halterteil (108) angeordnet sind und konfiguriert sind das deformierbare Element (104) in den Innenraum (122) hinein durch den Halterteil (108) hindurch zu bewegen; und
wobei die Umhüllungsvorrichtung ferner einen Gasauslass (128) aufweist, welcher konfiguriert ist
zum Bereitstellen eines druckbeaufschlagten Gases in dem Innenraum (122) der Umhüllung (118) während der Einführbewegung und
damit einen Glasfluss von dem Innenraum (122) in Richtung des deformierbaren Elements (104) und aus der Umhüllung (118) hinaus zu erzeugen;
wobei der Umhüllungshalter (106) einen zweiten Teil (110) hat, welcher von dem Halterteil (108) beabstandet ist, und wobei
der zweite Teil (110) konfiguriert ist zum Halten eines zweiten Endes der Umhüllung (118); und
wobei der zweite Teil (110) den Gasauslass (128) aufweist.

2. Umhüllungsvorrichtung gemäß Anspruch 1, wobei
der Halterteil (108) eine Hülse (112) aufweist;
wobei die Hülse (112) eine äußere Oberfläche (114) hat, welche konfiguriert ist zum Aufnehmen des ersten Endes (116) der Umhüllung (118);
wobei die Hülse (112) ferner eine innere Oberfläche (120) hat, welche eine Durchgangsöffnung (121) ausbildet zum Hindurchführen des deformierbaren Elements (104) während der Einführbewegung.

3. Umhüllungsvorrichtung gemäß einem beliebigen der Ansprüche 1 bis 2, wobei
der zweite Teil (110) ein Verschlussstopfen ist, welcher eine äußere Oberfläche hat, welche konfiguriert ist zum Aufnehmen des zweiten Endes (127) der Umhüllung (118).

4. Umhüllungsvorrichtung gemäß einem beliebigen der Ansprüche 1 bis 3, wobei
der Träger (102) und der Umhüllungshalter (106) konfiguriert sind bewegbar zu sein in Bezug auf einander in eine Ladeposition, die ein Befestigen des deformierbaren Elements (104) an dem Träger (102) außerhalb des Innenraums (122) zulässt; und
sich der Träger (102) in der Ladeposition durch den Umhüllungshalter (106) hindurch erstreckt.

5. Umhüllungsvorrichtung gemäß einem beliebigen der Ansprüche 1 bis 4, wobei
der Träger (102) räumlich fixiert ist und der Umhüllungshalter (106) bewegbar ist in Bezug auf den Träger (102), um die Einführbewegung durchzuführen.

6. Umhüllungsvorrichtung gemäß einem beliebigen der Ansprüche 1 bis 5, wobei
das deformierbare Element (104) ein Faserelement ist, welches eine Mehrzahl von Fasern aufweist.

7. Umhüllungsvorrichtung gemäß Anspruch 6 und ferner aufweisend die Merkmale gemäß Anspruch 2, wobei die innere Oberfläche (120) der Hülse (112) eine polierte Oberfläche ist zum Vermeiden von Schäden an den Fasern (105).

8. Umhüllungsvorrichtung gemäß einem beliebigen der Ansprüche 1 bis 7, welche ferner aufweist;
zumindest einen Aktuator (124), welcher konfiguriert ist die Einführbewegung durchzuführen;
ein Ventil (140) zum Steuern des Flusses von druckbeaufschlagten Gas in den Innenraum (122); und
einen Controller (136) zum Steuern des zumindest einen Aktuators (124) und/oder des Ventils (140).

9. Verfahren zum Platzieren einer Umhüllung (118) auf einem deformierbaren Element (104), wobei
die Umhüllung (118) einen Innenraum (122) und ein offenes Ende aufweist, wobei das Verfahren aufweist:
Durchführen einer Einführbewegung mittels Bewegens der Umhüllung (118) und des deformierbaren Elements (104) in Bezug auf einander, damit das deformierbare Element (104) in den Innenraum (122) der Umhüllung (118) hinein eingeführt wird;
wobei das Einführen des deformierbaren Elements (104) in den Innenraum (122) hinein ein Bewegen des deformierbaren Elements (104) in den Innenraum (122) hinein durch einen Halterteil (108) hindurch aufweist, welcher konfiguriert ist, das offene Ende (116) der Umhüllung (118) offen zu halten;
Bereitstellen eines druckbeaufschlagten Gases durch einen Gasauslass hindurch an den Innenraum (122) der Umhüllung (118) während der Einführbewegung, damit ein Gasfluss von dem Innenraum (122) in Richtung des deformierbaren Elements (104) und aus der Umhüllung (118) heraus erzeugt wird;
wobei ein Umhüllungshalter (106) den Halterteil (108) und einen zweiten Teil (110) aufweist, welcher von dem Halterteil (108) beabstandet ist, und wobei der zweite Teil (110) konfiguriert ist zum Halten eines zweiten Endes der Umhüllung (118); und
wobei der zweite Teil (110) den Gasauslass (128) aufweist.

10. Verfahren gemäß Anspruch 9,
wobei die Einführbewegung ein Ziehen des deformierbaren Elements (104) in die Umhüllung (118) hinein aufweist.

11. Verfahren gemäß einem beliebigen der Ansprüche 9 bis 10, wobei
der Halterteil eine Hülse aufweist und die Einführbewegung aufweist ein Bewegen des deformierbaren Elements (104) in den Innenraum (122) hinein durch die Durchgangsöffnung der Hülse (112) hindurch auf einer äußeren Oberfläche (114), auf der die Umhüllung (118) gehalten wird, wobei die Querschnittsform des deformierbaren Elements (104) mit der Querschnittsform der Durchgangsöffnung optional übereinstimmt und die Querschnittsfläche des deformierbaren Elements (104) kleiner ist als die Querschnittsfläche der Durchgangsöffnung (121).

12. Ein Computerprogramm, wobei das Computerprogramm konfiguriert ist zum, wenn es mittels eines Datenverarbeitungsvorrichtung (136) betrieben wird, Steuern des Verfahrens gemäß einem der Ansprüche 9 bis 11.

## Revendications

1. Dispositif de mise sous enveloppe (100, 200) destiné à placer une enveloppe (118) sur un élément déformable (104), dans lequel l'enveloppe (118) comprend un espace interne (122) et une extrémité ouverte, le dispositif de mise sous enveloppe comprenant :
un support (102) configuré pour recevoir l'élément déformable (104) ; et
un porte-enveloppe (106) configuré pour porter l'enveloppe (118) ;
dans lequel le support (102) et le porte-enveloppe (106) sont mobiles l'un par rapport à l'autre et sont configurés pour réaliser un mouvement d'insertion au cours duquel l'élément déformable (104) reçu par le support (102) est inséré à l'intérieur de l'espace interne (122) de l'enveloppe (118) portée par le porte-enveloppe (106) ;
le porte-enveloppe (106) comprenant une partie de support (108) configurée pour maintenir ouverte l'extrémité ouverte (116) de l'enveloppe (118) ;
le support (102) et la partie de support (108) étant agencés et configurés pour déplacer l'élément déformable (104) à l'intérieur de l'espace interne (122) à travers la partie de support (108) ; et
le dispositif de mise sous enveloppe comprenant en outre une sortie de gaz (128) configurée pour fournir un gaz sous pression à l'espace interne (122) de l'enveloppe (118) pendant le mouvement d'insertion et pour générer ainsi un flux de gaz de l'espace interne (122) vers l'élément déformable (104) et vers l'extérieur de l'enveloppe (118) ;
dans lequel le porte-enveloppe (106) présente une deuxième partie (110) espacée de la partie de support (108), et la deuxième partie (110) étant configurée pour maintenir une deuxième extrémité de l'enveloppe (118) ; et
dans lequel la deuxième partie (110) comprend la sortie de gaz (128).

2. Dispositif de mise sous enveloppe selon la revendication 1, dans lequel
la partie de support (108) comprend un manchon (112) ;
le manchon (112) présente une surface externe (114) configurée pour recevoir la première extrémité (116) de l'enveloppe (118) ;
le manchon (112) présente en outre une surface interne (120) formant un trou traversant (121) pour le passage de l'élément déformable (104) pendant le mouvement d'insertion.

3. Dispositif de mise sous enveloppe selon l'une quelconque des revendications 1 à 2, dans lequel
la deuxième partie (110) est un bouchon de fermeture présentant une surface externe configurée pour recevoir la deuxième extrémité (127) de l'enveloppe (118).

4. Dispositif de mise sous enveloppe selon l'une quelconque des revendications 1 à 3, dans lequel
le support (102) et le porte-enveloppe (106) sont configurés pour pouvoir être déplacés l'un par rapport à l'autre dans une position de chargement qui permet la fixation de l'élément déformable (104) au support (102) à l'extérieur de l'espace interne (122) ; et
dans la position de chargement, le support (102) s'étend à travers le porte-enveloppe (106).

5. Dispositif de mise sous enveloppe selon l'une quelconque des revendications 1 à 4, dans lequel
le support (102) est fixé dans l'espace et le porte-enveloppe (106) peut être déplacé par rapport au support (102) pour réaliser le mouvement d'insertion.

6. Dispositif de mise sous enveloppe selon l'une quelconque des revendications 1 à 5, dans lequel
l'élément déformable (104) est un élément fibreux comprenant une pluralité de fibres (105).

7. Dispositif de mise sous enveloppe selon la revendication 6 et comprenant en outre les caractéristiques de la revendication 2, dans lequel la surface interne (120) du manchon (122) est une surface polie évitant l'endommagement des fibres (105).

8. Dispositif de mise sous enveloppe selon l'une quelconque des revendications 1 à 7, comprenant en outre :
au moins un actionneur (124) configuré pour réaliser le mouvement d'insertion ;
une soupape (140) destinée à commander le flux de gaz sous pression vers l'espace interne (122) ; et
un dispositif de commande (136) destiné à commander l'au moins un actionneur (124) et/ou la soupape (140).

9. Procédé de mise en place d'une enveloppe (118) sur un élément déformable (104), dans lequel l'enveloppe (118) comprend un espace interne (122) et une extrémité ouverte, le procédé comprenant :
la réalisation d'un mouvement d'insertion par déplacement de l'enveloppe (118) et de l'élément déformable (104) l'une par rapport à l'autre, en insérant ainsi l'élément déformable (104) à l'intérieur de l'espace interne (122) de l'enveloppe (118) ;
dans lequel l'insertion de l'élément déformable (104) à l'intérieur de l'espace interne (122) comprend le déplacement de l'élément déformable (104) à l'intérieur de l'espace interne (122) à travers une partie de support (108) configurée pour maintenir ouverte l'extrémité ouverte (116) de l'enveloppe (118) ;
la fourniture d'un gaz sous pression à l'espace interne (122) de l'enveloppe (118), à travers une sortie de gaz, pendant le mouvement d'insertion, en générant ainsi un flux de gaz de l'espace interne (122) vers l'élément déformable (104) et vers l'extérieur de l'enveloppe (118) ;
dans lequel un porte-enveloppe (106) comprend la partie de support (108) et une deuxième partie (110) espacée de la partie de support (108), et la deuxième partie (110) étant configurée pour maintenir une deuxième extrémité de l'enveloppe (118) ; et
dans lequel la deuxième partie (110) comprend la sortie de gaz (128).

10. Procédé selon la revendication 9,
dans lequel le mouvement d'insertion comprend le tirage de l'élément déformable (104) à l'intérieur de l'enveloppe (118).

11. Procédé selon l'une quelconque des revendications 9 à 10, dans lequel
la partie de support comprend un manchon et le mouvement d'insertion comprend le déplacement de l'élément déformable (104) à l'intérieur de l'espace interne (122) à travers le trou traversant du manchon (112) sur une surface externe (114) duquel l'enveloppe (118) est maintenue, dans lequel la forme en section transversale de l'élément déformable (104) se conforme éventuellement à la forme en section transversale du trou traversant et la superficie de section transversale de l'élément déformable (104) est inférieure à la superficie de section transversale du trou traversant (121).

12. Programme informatique, le programme informatique étant configuré, lorsqu'il est exécuté par un dispositif de traitement de données (136), pour commander le procédé tel qu'il est exposé selon l'une quelconque des revendications 9 à 11.
